Europäisches Patentamt

European Patent Office

Office européen des brevets

(11) Numéro de publication: **0 162 775 B1**

(12) **FASCICULE DE BREVET EUROPEEN**

(45) Date de publication de fascicule du brevet: **03.08.94** (51) Int. Cl.⁵: **G02F 1/137**

(21) Numéro de dépôt: **85400913.1**

(22) Date de dépôt: **10.05.85**

(54) **Cellule à cristal liquide susceptible de présenter une structure homéotrope, à biréfringence compensée pour cette structure.**

(30) Priorité: **18.05.84 FR 8407767**

(43) Date de publication de la demande:
**27.11.85 Bulletin 85/48**

(45) Mention de la délivrance du brevet:
**03.08.94 Bulletin 94/31**

(84) Etats contractants désignés:
**CH DE FR GB IT LI NL**

(56) Documents cités:
**US-A- 3 784 280**
**US-A- 3 960 438**
**US-A- 4 385 806**

(73) Titulaire: **COMMISSARIAT A L'ENERGIE ATO-MIOUE**
**31/33, rue de la Fédération**
**F-75015 Paris Cédex 15(FR)**

(72) Inventeur: **Clerc, Jean-Frédéric**
**10, Allée du Pré Blanc**
**F-38240 Meylan(FR)**
Inventeur: **Deutsch, Jean-Claude**
**52, rue Thiers**
**F-38000 Grenoble(FR)**

(74) Mandataire: **Mongrédien, André et al**
**c/o BREVATOME**
**25, rue de Ponthieu**
**F-75008 Paris (FR)**

EP 0 162 775 B1

Rank Xerox (UK) Business Services
(3.10/3.09/3.3.3)

## Description

La présente invention concerne une cellule à cristal liquide susceptible de présenter une structure homéotrope, à biréfringence compensée pour cette structure. Elle s'applique notamment à la réalisation de dispositifs d'affichage de données, tels que les montres ou les calculatrices électroniques de poche.

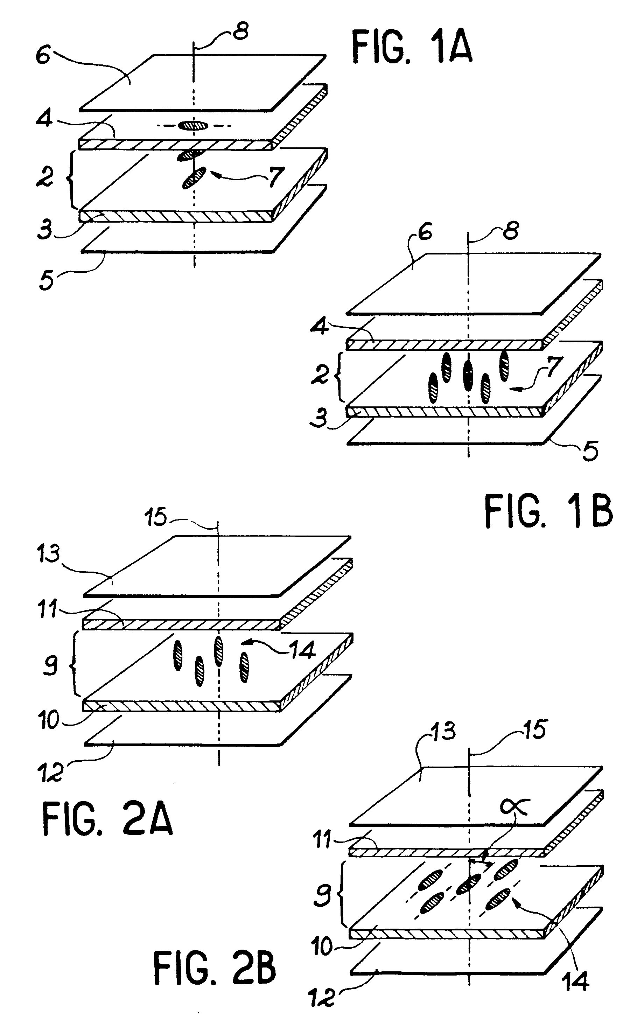

On connaît différentes cellules ou afficheurs à cristal liquide dont des exemples sort représentés sur les figures 1A à 2B. Sur les figures 1A et 1B, on à représenté schématiquement une cellule à cristal liquide, du type "à nématique en hélice", comprenant une couche de cristal liquide nématique 2 comprise entre deux plaques de verres 3 et 4 porteuses d'électrodes non représentées, et deux polariseurs rectilignes 5 et 6, encore appelés polariseurs linéaires, disposés de part et d'autre de l'ensemble constitué par la couche et les deux plaques. La couche est disposée de façon que les molécules 7 qui la composent présentent lorsque la cellule est au repos (figure 1A) c'est-à-dire lorsqu'aucune tension électrique n'est appliquée entre les électrodes, une disposition parallèle aux plaques et une structure hélicoïdale telle que les molécules qui sont en regard du polariseur destiné à recevoir une lumière incidente, soient perpendiculaires à l'axe d'absorption maximale de ce polariseur et que les molécules qui sont situées en regard de l'autre polariseur soient parallèles à cet axe, les axes d' absorption maximale des polariseurs étant en outre soit perpendiculaires (pour obtenir un contraste positif, "noir sur blanc") soit parallèles (pour obtenir un contraste négatif "blanc sur noir"). Lorsque la cellule est excitée, c'est-à-dire lorsqu'une tension électrique appropriée est appliquée entre les électrodes, le cristal liquide présente une structure homéotrope dans laquelle les molécules 7 sont toutes parallèles à une même direction 8 perpendiculaires aux deux plaques et appelée "direction d'homéotropie" (figure 1B).

Sur les figures 2A et 2B, on a représenté schématiquement une cellule à cristal liquide du type "à biréfringence contrôlée électriquement", comprenant une couche de cristal liquide nématique 9 disposée entre deux plaques de verre 10 et 11 munies d'électrodes non représentées, et deux polariseurs 12 et 13 disposés de part et d'autre de l'ensemble constitué par la couche et les plaques. Les deux polariseurs sont de préférence circulaires, ou quasi-circulaires, et complémentaires l'un de l'autre, c'est-à-dire aptes a donner des sens de polarisation opposés à deux ondes lumineuses se propageant suivant une même direction perpendiculaire aux deux polariseurs et tombant respectivement sur l'un de ceux-ci et sur l'autre. Lorsque la cellule est au repos, le cristal liquide présente une structure homéotrope, toutes les molécules 14 qui le composent étant alors parallèles à une même direction 15 perpendiculaire aux deux plaques 11 et 12 et encore appelée "direction d'homéotropie" (figure 2A). Lorsque la cellule est excitée, les molécules sont toutes inclinées suivant une même direction formant un angle $\alpha$ avec la direction d'homéotropie.

On connaît aussi, par le document US-A-3 960 438, une cellule à cristal liquide du type à biréfringence contrôlée électriquement, correspondant au préambule de la revendication 4.

Les cellules du type à nématique en hélice ou du type à biréfringence contrôlée électriquement présentent un inconvénient : lorsqu'elles sont dans leur structure homéotrope et sont observées obliquement, leur contraste se dégrade, et ce d'autant plus que l'angle d'observation est important, ce contraste pouvant même s'inverser.

La présente invention a pour but de remédier à cet inconvénient.

Elle a pour objet une cellule à cristal liquide du type transmissif, conformément à la revendication 1.

Lors d'une observation oblique (par opposition à une observation effectuée suivant la direction d'homéotropie), le cristal liquide, dans sa structure homéotrope, est biréfringent et cesse d'être inactif vis-à-vis de l'ellipticité d'une onde lumineuse qui le traverse, en modifiant alors cette ellipticité, conduisant ainsi à une dégradation du contraste. Dans l'invention, l'épaisseur de la couche de cristal liquide coopére avec les moyens de polarisation pour réaliser la compensation, pour un plan d'observation déterminé, de la biréfringence de la couche de cristal liquide dans sa structure homéotrope, et cette compensation permet de conserver un contraste élevé dans le cas d'une observation oblique effectuée dans ce plan d'observation, et ce, pour des angles d'observation importants, pouvant aller jusqu'à 70° dans le cas d'une cellule du type à biréfringence contrôlée électriquement.

Bien entendu, les électrodes peuvent comporter une ou plusieurs parties, suivant la nature des informations à visualiser au moyen de la cellule.

Dans une réalisation particulière, les premier et second moyens de polarisation consistent respectivement en un premier couple comprenant un premier polariseur rectiligne et, entre celui-ci et ledit ensemble, une première lame à retard, et un second couple comprenant un second polariseur rectiligne et, entre celui-ci et ledit ensemble, une seconde lame à retard, les axes d'absorption maximale respectifs des polariseurs rectilignes sont parallèles à un même plan perpendiculaire au plan d'observation et parallèle à la direction d'homéotropie de la couche et sont perpendiculaires à cette direction d'homéotropie, chaque lame à retard est disposée de façon que deux de ses lignes neutres soient perpendiculaires à la direction d'homéotropie et que l'une des bissectrices de l'angle formé par ces lignes neutres se projette, parallèlement à la direction d'homéotropie, sensiblement sur l'axe d'absorption maximale du polariseur rectiligne correspondant, les lames à retard sont en outre disposées de façon que leurs axes lents respectifs soient situés de part et d'autre dudit même plan.

Selon une autre réalisation particulière, les deux lames à retard sont fusionnées en une seule et la bissectrice de l'angle formé par les lignes neutres de cette seule lame se projette parallèlement à la direction d'homéotropie, sensiblement sur l'axe d'absorption maximum de l'un des polariseurs rectilignes.

La présente invention a aussi pour objet une cellule à cristal liquide du type réflectif, conformément à la revendication 4.

Dans une réalisation particulière, le moyen de polarisation comprend un polariseur rectiligne et, entre celui-ci et ledit ensemble, une lame à retard, l'axe d'absorption maximale du polariseur rectiligne est perpendiculaire à la direction d'homéotropie de la couche de cristal liquide et perpendiculaire au plan d'observation, et la lame à retard est d'une part disposée de façon que deux de ses lignes neutres soient perpendiculaires à la direction d'homéotropie et que l'une des bissectrices de l'angle formé par ces lignes neutres se projette, parallèlement à la direction d'homéotropie.

La présente invention sera mieux comprise à la lecture de la description qui suit, d'exemples de réalisation donnés à titre indicatif et nullement limitatif, en référence aux dessins annexés sur lesquels :

- les figures 1A et 1B sont des vues schématiques d'une cellules à cristal liquide du type à nématique en hélice, connue dans l'état de la technique, respectivement au repos et à l'état excité, et ont déjà été décrites,
- les figures 2A et 2B sont des vues schématiques d'une cellule à cristal liquide à biréfringence contrôlée électriquement, connue dans l'état de la technique, respectivement au repos et à l'état excité, et ont déjà été décrites,
- la figure 3 est une vue schématique montrant la plan d'observation d'une cellule selon l'invention, du type transmissif, à biréfringence contrôlée électriquement,
- la figure 4 est une vue éclatée schématique de la cellule représentée sur la figure 3,
- la figure 5 est une vue schématique d'un plan d'onde correspondant à une onde lumineuse plane tombant obliquement sur la cellule représentée sur la figure 4, suivant le plan d'observation représenté sur la figure 3,

- la figure 6A est une vue schématique montrant la polarisation d'une onde lumineuse plane tombant sous incidence nulle, sur la cellule représentée sur la figure 4, à l'entrée de la première lame à retard dont est munie cette cellule,
- la figure 6B est une vue schématique montrant la polarisation de cette onde plane, à la sortie de la première lame à retard,
- la figure 7A est une vue schématique montrant la polarisation de l'onde plane tombant obliquement sur la cellule de la figure 4, à l'entrée de la première lame à retard,
- la figure 7B est une vue schématique montrant la polarisation de cette onde à la sortie de la première lame à retard,
- la figure 7C est une vue schématique montrant la polarisation de cette onde après qu'elle ait traversé une certaine épaisseur de la couche de cristal liquide,
- la figure 7D est une vue schématique montrant la polarisation de cette onde, après avoir traversé la moitié de la couche de cristal liquide, l'épaisseur de celle-ci étant adaptée de façon à compenser sa biréfringence, et
- la figure 8 est une vue éclatée schématique d'une cellule à cristal liquide du type réflectif, à biréfringence contrôlée électriquement, selon l'invention.

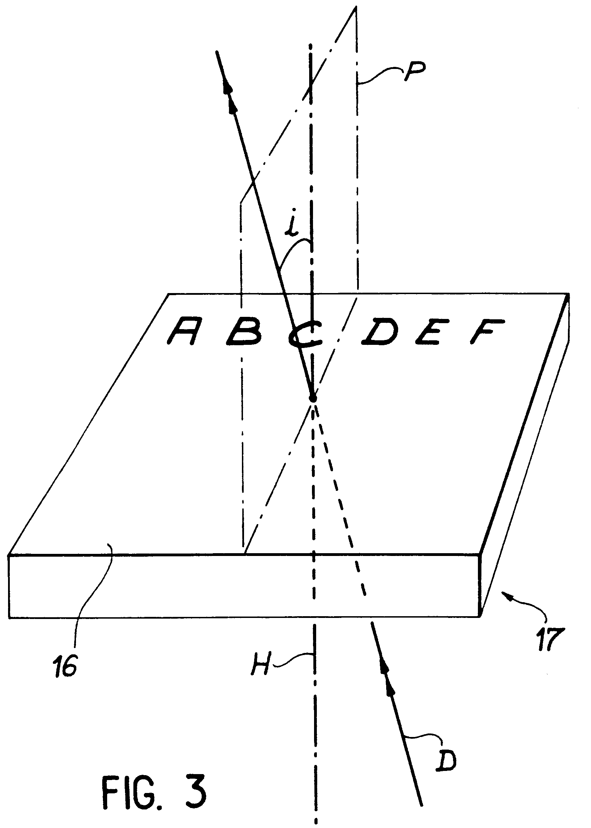

Sur la figure 3, on à représenté schématiquement le plan d'observation P ou plan principal de lecture, plan dans lequel s'effectue la lecture de l'écran 16 d'une cellule 17 du type transmissif, à biréfringence contrôlée électriquement selon l'invention. La direction d'homéotropie H de la cellule est perpendiculaire au plan de l'écran. Le plan d'observation P correspond à la position la plus probable du lecteur de l'écran, ce lecteur observant l'écran sous une incidence variable. Ce plan P est perpendiculaire à l'écran et donc parallèle à la direction d'homéotropie H. On a également représenté sur la figure 3 la direction de propagation D d'une onde lumineuse plane tombant dans le plan d'observation P sur la cellule 17, avec un angle d'incidence i. Cet angle d'incidence i est en fait l'angle d'incidence dans le milieu actif dont l'indice optique est généralement voisin de 1,5 et qui correspond aux polariseurs rectilignes, aux lames à retard et à la touche de cristal liquide que comporte la cellule 16 et qui seront décrits par la suite. L'angle d'incidence dans l'air, correspondant à l'angle i, lui est supérieur. La direction de propagation D est également la direction de propagation "théorique" pour un observateur qui serait placé dans ledit milieu actif.

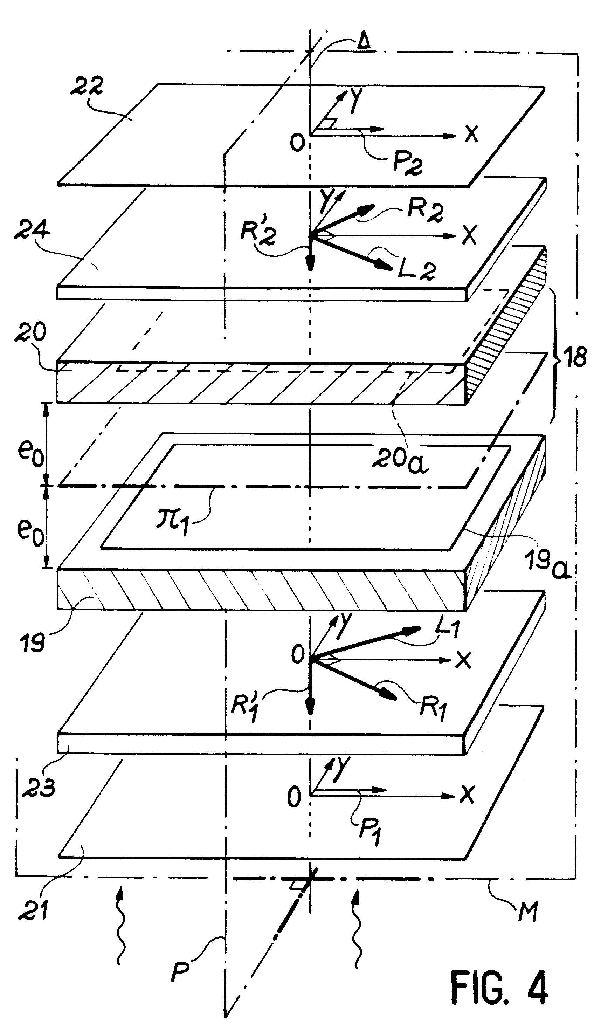

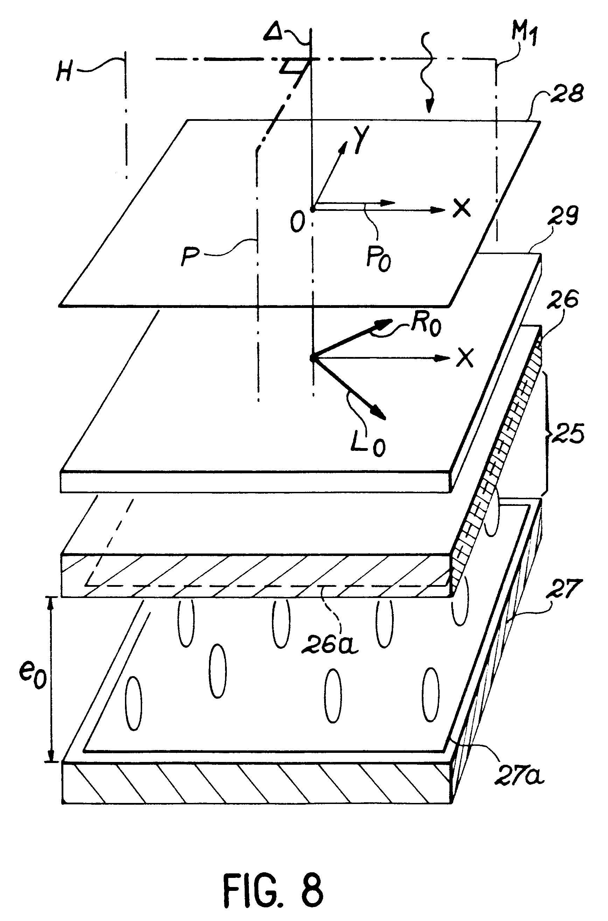

Sur la figure 4, on a représenté schématiquement, en vue éclatée, la cellule selon l'invention, à laquelle on s'est référé dans la description de la figure 3. Cette cellule comprend une couche de cristal liquide nématique 18 qui s'étend entre deux plaques de verre 19 et 20 dont l'indice optique est de l'ordre de 1,5. Ces plaques de verre 19, 20 comportent de façon connue sur leurs faces qui sont directement en regard de la couche de cristal liquide, des électrodes transparentes 19a, 20a qui, lorsqu'une tension électrique convenable est appliquée entre elles, font apparaître des signes (chiffres, lettres, points...) sur l'écran de la cellule. Les deux plaques sont en outre parallèles entre elles et la couche de cristal liquide est disposée entre ces plaques de façon à présenter, lorsqu'aucune tension n'est appliquée entre les électrodes, une structure homéotrope dont la direction d'homéotropie est perpendiculaire aux deux plaques 19 et 20, les molécules de la couche de cristal liquide prenant toutes la même orientation par rapport à la direction d'homéotropie lorsqu'une tension électrique appropriée est appliquée entre les électrodes. C'est pour cela que la cellule selon l'invention, décrite en référence à la figure 4, est classée dans la catégorie des cellules du type à biréfringence contrôlée électriquement. Il en est d'ailleurs de même en ce qui concerne la cellule selon l'invention décrite en référence à la figure 8.

La cellule de la figure 4 comprend également de part et d'autre et au voisinage de l'ensemble constitué par la couche de cristal liquide et les plaques de verre, un premier polariseur rectiligne 21 et un second polariseur rectiligne 22, tous deux en forme de plaque, le premier polariseur 21 étant situé du côté de la plaque de verre 19 destinée à recevoir la lumière incidente. La cellule comporte également une première lame à retard 23 disposée entre la plaque 19 et le premier polariseur 21 ainsi qu'une seconde lame à retard 24, disposée entre la plaque de verre 20 et le second polariseur 22. Les polariseurs 21, 22 et les lames à retard 23, 24 sont parallèles aux plaques 19 et 20.

Les polariseurs rectilignes 21 et 22 sont en outre disposés de façon que leurs axes d'absorption maximale respectifs $P_1$ et $P_2$ soient parallèles l'un à l'autre et parallèles à un plan M perpendiculaire au plan d'observation P et parallèle à la direction d'hométropie, le plan M coupant ainsi le plan d'observation P suivant une droite $\Delta$ parallèle à la direction d'homéotropie. La lame à retard 23 (respectivement 24) est disposée de façon que deux de ses lignes neutres, correspondant respectivement à son axe lent $L_1$ (respectivement $L_2$) et à l'un de ses axes rapides $R_1$ (respectivement $R_2$) soient perpendiculaires à la droite $\Delta$ et que l'une des bissectrices formées par ces lignes neutres se projette, parallèlement à la droite $\Delta$, sensiblement sur l'axe d'absorption maximale $P_1$ (respectivement $P_2$) du polariseur rectiligne correspondant 21 (respectivement 22). L'autre axe rapide $R'_1$ -

(respectivement $R'_2$) est alors parallèle à la droite $\Delta$. Les lames à retard sont en outre disposées de telle façon que leurs axes lents respectifs $L_1$ et $L_2$ soient situés de part et d'autre du plan M. De plus, les lames à retard 23 et 24 sont choisies de façon que les couples premier polariseur rectiligne-première lame à retard et second polariseur rectiligne-seconde lame à retard se comportent comme des polariseurs quasi-circulaires complémentaires l'un de l'autre, vis-à-vis d'une onde lumineuse plane incidente, se propageant suivant la droite $\Delta$.

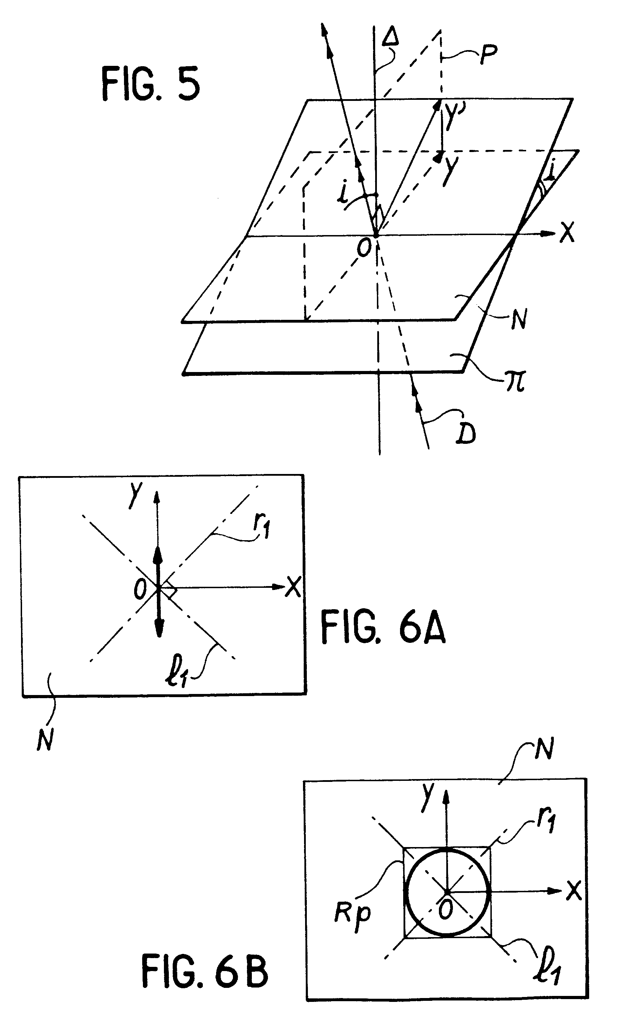

On va maintenant définir l'épaisseur de la couche de cristal liquide 18 conduisant, en association avec les polariseurs 21, 22 et les lames à retard 23, 24, à une compensation de la biréfringence de la couche de cristal liquide, sous incidence oblique et dans le plan d'observation P. Pour ce faire, on considère l'onde lumineuse plane de direction D dans le plan P (figure 3) ainsi que le repère mobile constitué par deux axes orthogonaux X et Y (figure 5) dont l' intersection (mobile) O appartient à la droite $\Delta$ et qui sont tous deux perpendiculaires à cette droite $\Delta$, l'axe X étant en outre perpendiculaire au plan P. Le repère XY définit ainsi un plan N perpendiculaire à la droite $\Delta$. On considère également un autre repère mobile constitué par l'axe X et par un axe Y' se déduisant de l'axe Y par une rotation d'axe X et d'angle i. L'autre repère XY' est donc contenu dans un plan d'onde $\pi$ perpendiculaire à la direction D.

On va maintenant suivre l'évolution de la polarisation de l'onde lumineuse de direction D, dans le repère XY'. On considère d'abord le cas particulier d'une incidence nulle, correspondant à un angle i nul, c'est-à-dire à une onde lumineuse plane se propageant suivant la direction d'homéotropie. Après avoir traversé le premier polariseur rectiligne 21 juste à l'entrée de la première lame à retard 23, l'onde lumineuse plane présente une polarisation rectiligne suivant l'axe Y, comme le montre la figure 6A sur laquelle on a également représenté en traits mixtes, les axes $l_1$ et $r_1$ qui sont les projections, sur le plan N, parallèlement à la droite $\Delta$, des axes lent $L_1$ et rapide $R_1$. A la sortie de la première lame 23, l'onde présente une polarisation quasi-circulaire et son ellipse de polarisation, qui est très voisine d'un cercle, est inscrite dans un rectangle $R_P$ dont les côtés sont sensiblement égaux et dont deux côtés adjacents ont respectivement pour médiatrice les axes X et Y (figure 6B).

On considère maintenant le cas où l'angle i est non nul (cas de l'onde de direction D des figures 3 et 5). Après la traversée du premier polariseur 21 et juste à l'entrée de la première lame à retard 23, l'onde présente une polarisation rectiligne et la vibration lumineuse qui lui correspond est parallèle à Y' et s'inscrit dans un rectangle $R'_P$, suivant l'une des diagonales de celui-ci, les axes $l_1$ et $r_1$ consti-

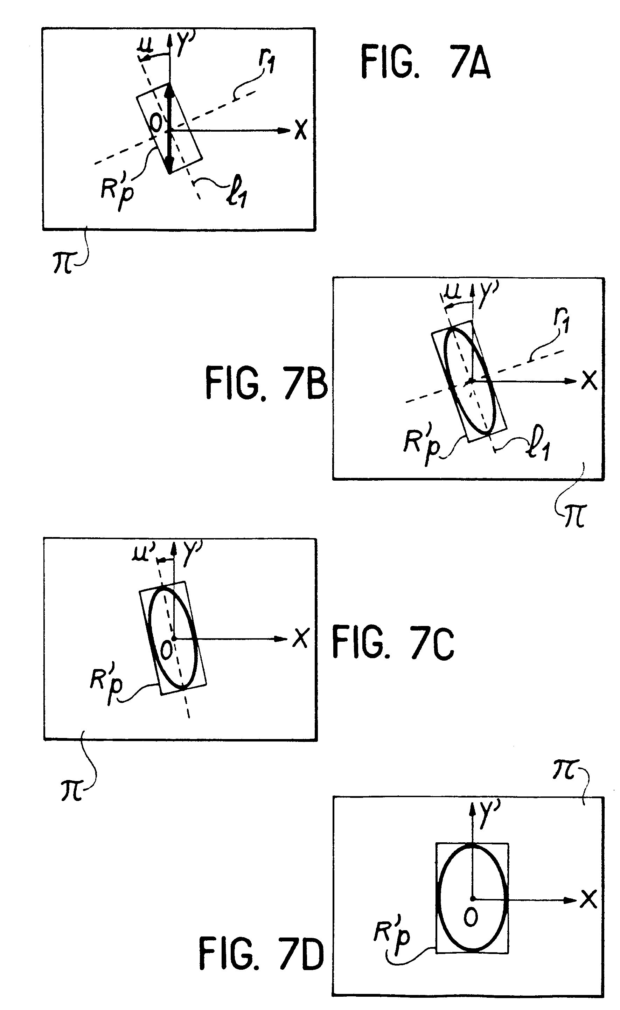

tuantrespectivement tes médiatrices des petits et grands côtés de ce rectangle R'$_P$ et l'axe l$_1$ formant un angle u avec l'axe Y' (figure 7A).

A la sortie de la première lame à retard 23, l'onde tombant sous incidence oblique est polarisée elliptiquement et son ellipse de polarisation est inscrite dans le rectangle R'$_P$, le grand axe de l'ellipse s'étendant le long de l'axe l$_1$ et le petit axe de cette ellipse s'étendant le long de l'axe r$_1$ - (figure 7B).

Lorsque l'onde s'est propagée dans une certaine épaisseur de la couche de cristal liquide 18, le petit axe et le grand axe de l'ellipse de polarisation se raprochent respectivement de l'axe X et de l'axe Y', l'angle entre le grand axe de l'ellipse et l'axe Y' prenant une valeur u' inférieure à u (figure 7C).

Il existe donc une épaisseur particulière e$_0$ de la couche de cristal liquide, pour laquelle le grand axe et le petit axe de l'ellipse de polarisation sont respectivement situés sur l'axe Y' et sur l'axe X, l'angle entre le grand axe de l'ellipse et l'axe Y' étant ainsi nul (figure 7D). Selon l'invention, on prend donc comme épaisseur de la couche de cristal liquide 18 le double de cette épaisseur particulière e$_0$ qui est déterminable par l'homme de l'art (au moyen d'une simulation informatique ou expérimentalement). On observe alors une extinction totale de l'onde à la sortie du deuxième polariseur rectiligne 22, que l'angle d'incidence i soit nul ou non nul. Le contraste est donc conservé pour des observations obliques.

On utilise des milieux biaxes de préférence à des milieux uniaxes, pour réaliser les lames à retard. Ceci se justifie pour compenser des épaisseurs optiques fortes de la couche de cristal liquide. Les axes rapides R$_1'$ et R$_2'$ sont alors respectivement choisis plus rapides que tes axes R$_1$ et R$_2$.

A titre indicatif et nullement limitatif, les lames à retard 23 et 24 sont réalisées à l'aide de lames en di-acétate de cellulose de 200 $\mu$m d'épaisseur, étirées de façon à obtenir un retard de chemin optique de l'ordre de 150 nm sous une incidence nulle. On peut choisir le cristal liquide dans la famille des bases de SCHIFF et réaliser une couche de cristal liquide dont l'épaisseur est de l'ordre de 5 $\mu$m et dont l'anisotropie optique est égale à 0,2. On peut également choisir le cristal liquide dans la famille des phényl-cyclo-hexanes et réaliser une couche de cristal liquide dont l'épaisseur est de l'ordre de 10 $\mu$m et dont l'anisotropie optique est égale à 0,1.

Sur la figure 8, on a représenté schématiquement, en vue éclatée, une cellule à cristal liquide du type réflectif, à biréfringence contrôlée électriquement selon l'invention. Cette cellule comprend une couche de cristal liquide nématique 25 comprise entre deux plaques de verre 26 et 27 parallèles. La plaque de verre 26 est munie, sur sa face directement en regard de la couche de cristal liquide, d'électrodes transparentes 26a. L'autre plaque de verre 27 est munie sur sa face directement en regard de la couche de cristal liquide, d'une électrode 27a métallique et donc optiquement réflectrice. La couche de cristal liquide est disposée de façon à présenter, lorsqu'aucune tension électrique n'est appliquée entre les électrodes, une structure homéotrope dont la direction d'homéotropie est perpendiculaire aux deux plaques.

La cellule représentée sur la figure 8 comporte également un polariseur rectiligne 28, en forme de plaque, parallèle aux plaques 26 et 27 et situé à l'extérieur de l'ensemble formé par les plaques et la couche, au voisinage de la plaque 26 destinée à recevoir la lumière incidente, ainsi qu'une lame à retard 29, qui est interposée entre le polariseur rectiligne et la plaque 26 et qui est également parallèle aux plaques. Le polariseur rectiligne 28 est disposé de façon que son axe d'absorption maximale P$_0$ soit non seulement perpendiculaire à la direction d'homéotropie mais encore au plan d'observation P qui occupe une position comparable à celle qui a été définie en référence à la figure 3. On peut alors considérer un plan M$_1$ parallèle à cet axe, perpendiculaire au plan d'observation P et parallèle à la direction d'homéotropie H. Ce plan M$_1$ coupe le plan d'observation P suivant une droite $\Delta$ parallèle à la direction d'homéotropie. La lame à retard est disposée de façon que deux de ses lignes neutres, celles-ci correspondant respectivement à l'axe lent L$_0$ et à un axe rapide R$_0$ de la lame, soient perpendiculaires à la droite $\Delta$ et que l'une des bissectrices de l'angle qu'elles forment se projette parallèlement à la droite $\Delta$, sur le polariseur rectiligne 28, suivant l'axe d'absorption maximale P$_0$ de celui-ci. On choisit en outre la lame à retard 29 de façon qu'elle forme, avec le polariseur rectiligne 28, un polariseur circulaire, vis-à-vis d'une onde lumineuse plane tombant sur le polariseur rectiligne suivant la droite $\Delta$.

L'épaisseur de la couche de cristal liquide 25 est choisie égale à l'épaisseur particulière e$_0$ définie plus haut. En effet, l'électrode optiquement réflectrice 27a joue alors, dans la cellule représentée sur la figure 8, le rôle du plan de symétrie $\pi_1$ qui est parallèle aux deux plaques de verre 19 et 20 représentées sur la figure 4, et qui partage la couche 18 de cette cellule en deux moitiés d'épaisseur e$_0$.

On compense ainsi la biréfringence de la couche de cristal liquide 25. Pour réaliser la lame à retard on utilise de préférence une lame quart d'onde. Etant donné une onde lumineuse plane tombant sur le polariseur rectiligne 28, puis se réfléchissant sur l'électrode métallique 27a pour émerger ensuite du polariseur rectiligne 28, on notera donc que la compensation de la biréfringence de la couche, c'est-à-dire l'extinction de l'onde considérée à sa sortie du polariseur rectiligne, n'est rigoureusement obtenue que pour une longueur d'onde déterminée, égale à 4 fois le retard optique occasionné par la lame utilisée.

Les lames à retard (ou la lame à retard) peuvent être réalisées à l'aide de cellules (ou d'une cellule) à cristal liquide additionnelle(s) présentant une orientation des molécules homogène planaire.

On peut dire que la compensation de la biréfringence des couches de cristal liquide correspondant aux cellules décrites en référence aux figures 4 et 8 est "externe", car elle est réalisée par adjonction aux couches, de moyens appropriés, situés de part et d'autre de ces couches, sans "agir" sur celles-ci (sauf sur leur épaisseur).

**Revendications**

1.  Cellule à cristal liquide, du type transmissif, à biréfringence contrôlée électriquement, comprenant:
    - une première et une deuxième plaques (19,20) parallèles et en face l'une de l'autre;
    - des électrodes transparentes (19a,20a) déposées sur les faces intérieures desdites plaques (19,20);
    - une couche de cristal liquide (18) nématique a anisotropie diélectrique négative confinée entre lesdites plaques (19,20);
    un premier et un second moyens de polarisation (21,23; 22,24) équivalents a des polarisateurs quasi-circulaires complémentaires l'un de l'autre et situés sur les faces extérieures desdites plaques (19,20),
    caractérisée en ce que
    l'épaisseur de la couche de cristal liquide est égale au double de l'épaisseur particulière ($e_o$) apte à annuler, lorsqu'une onde lumineuse plane tombant obliquement sur la cellule suivant un plan d'observation parallèle à la direction d'homéotropie de la cellule a parcouru toute cette épaisseur particulière, l'angle formé entre le plan d'observation et le grand axe de l'ellipse de polarisation de cette onde.

2.  Cellule selon la revendication 1, caractérisée en ce que les premier (21 ; 23) et second (22 ; 24) moyens de polarisation consistent respectivement en un premier couple comprenant un premier polariseur rectiligne (21) et, entre celui-ci et ledit ensemble, une première lame à retard (23), et un second couple comprenant un second polariseur rectiligne (22) et, entre celui-ci et ledit ensemble, une seconde lame à retard (24), en ce que les axes d'absorption maximale respectifs ($P_1$ ; $P_2$) des polariseurs

rectilignes sont parallèles à un même plan (M) perpendiculaire au plan d'observation (P) et parallèle à la direction d'homéotropie de la couche (18) et sont perpendiculaires à cette direction d'homéotropie, en ce que chaque lame à retard (23 ; 24) est disposée de façon que ses lignes neutres ($L_1$, $R_1$ ; $L_2$, $R_2$) soient perpendiculaires à la direction d'homéotropie et que l'une des bissectrices de l'angle formé par ces lignes neutres se projette, parallèlement à la direction d'homéotropie, sensiblement sur l'axe d'absorption maximale ($P_1$ ; $P_2$) du polariseur rectiligne correspondant, en ce que les lames à retard sont en outre disposées de façon que leurs axes lents respectifs soient situés de part et d'autre dudit même plan (M);

3.  Cellule selon la revendication 2, caractérisée en ce que les deux lames à retard sont fusionnées en une seule, la bissectrice de l'angle formé par les lignes neutres de cette seule lame se projetant parallèlement à la direction d'homéotropie, sensiblement sur l'axe d'absorption maximum de l'un des polariseurs rectilignes.

4.  Cellule à cristal liquide, du type réflectif, à biréfringence contrôlée électriquement comprenant:
    - une première et une deuxième plaques (26,27) parallèles et en face l'une de l'autre;
    - une première électrode transparente (26a) déposée sur la face intérieure de ladite première plaque (26);
    - une deuxième électrode réflectrice (27a) déposée sur la face intérieure de ladite deuxième plaque (27);
    - une couche de cristal liquide (25) nématique à anisotropie diélectrique négative confinée entre lesdites plaques (26, 27);
    - un moyen de polarisation circulaire (28,29) situé sur la face extérieure de ladite première plaque (26),
    caractérisée en ce que
    l'épaisseur ($e_o$) de la couche de cristal liquide est telle qu'elle annule, lorsqu'une onde lumineuse plane tombant obliquement sur la cellule suivant un plan d'observation parallèle à la direction d'homéotropie a parcouru toute cette épaisseur, l'angle formé entre le plan d'observation et le grand axe de l'ellipse de polarisation de cette onde.

5.  Cellule selon la revendication 4, caractérisée en ce que le moyen de polarisation comprend un polariseur rectiligne (28) et, entre celui-ci et ledit ensemble, une lame à retard (29), en ce que l'axe d'absorption maximale ($P_0$) du polariseur rectiligne est perpendiculaire à la direction d'homéotropie de la couche de cristal liquide (25) et perpendiculaire au plan d'observation, et en ce que la lame à retard est d'une part disposée de façon que ses lignes neutres ($L_0$, $R_0$) soient perpendiculaires à la direction d'homéotropie et que l'une des bissectrices de l'angle formé par ces lignes neutres se projette, parallèlement à la direction d'homéotropie, sur l'axe d'absorption maximale du polariseur rectiligne.

6. Cellule selon l'une quelconque des revendications 2, 3 et 5, caractérisée en ce que chaque lame à retard est réalisée à partir d'un matériau biaxe tel que son axe neutre le plus rapide soit aligné sur la direction d'homéotropie.

7. Cellule selon l'une quelconque des revendications 2, 3 et 5, caractérisée en ce que chaque lame à retard est constituée par une cellule à cristal liquide additionnelle dont l'orientation des molécules par rapport aux parois de ladite cellule additionnelle est homogène planaire.

**Claims**

1. Transmissive-type, electrically controlled birefringent, liquid crystal cell comprising a first and a second plates (19,20), which are parallel and facing one another, transparent electrodes (19a,20a) deposited on the inner faces of said plates (19,20), a nematic liquid crystal layer (18) having negative dielectric anisotropy confined between the said plates (19,20), first and second polarizing means (21,23;22,24) equivalent to complementary quasi-circular polarizers located on the outer faces of said plates (19,20), characterized in that the thickness of the liquid crystal layer is equal to double the particular thickness ($e_0$) which can be cancelled out when a plane lightwave dropping obliquely onto the cell in accordance with an observation plane parallel to the homeotropy direction of said cell has traversed all said particular cell, the angle formed between the observation plane and the major axis of the polarization ellipse of said wave.

2. Cell according to claim 1, characterized in that the first (21,23) and the second (22,24) polarization means respectively comprise a first pair having a first linear polarizer (21) and, between the latter and said assembly, a first delay plate (23), and a second pair having a second linear polarizer (22) and, between the latter and said assembly, a second delay plate (24), in that the respective maximum absorption axes ($P_1$;$P_2$) of the linear polarizers are parallel to the same plane (M) perpendicular to the observation plane (P) and parallel to the homeotropy direction of the layer (18) and are perpendicular to said homeotropy direction, in that each delay plate (23,24) is positioned in such a way that its neutral lines ($L_1$,$R_1$; $L_2$,$R_2$) are perpendicular to the homeotropy direction and that one of the bisectors of the angle formed by these neutral lines is projected, parallel to the homeotropy direction, substantially onto the maximum absorption axis ($P_1$;$P_2$) of the corresponding linear polarizer and that the delay plates are also positioned so that their respective slow axes are located on either side of said same plane (M).

3. Cell according to claim 2, characterized in that the two delay plates are combined into a single plate, the bisector of the angle formed by the neutral lines of said single plate being projected parallel to the homeotropy direction substantially onto the maximum absorption axis of one of the linear polarizers.

4. Reflective-type, electrically controlled birefringent, liquid crystal cell comprising a first and a second plates (26,27), which are parallel and face one another, a first transparent electrode (26a) deposited on the inner face of said first plate (26), a second reflecting electrode (27a) deposited on the inner face of said second plate (27), a nematic liquid crystal layer (25) having negative dielectric anisotropy confined between the said plates (26,27), a circular polarization means (28,29) located on the outer face of said first plate (26), characterized in that the thickness ($e_0$) of the liquid crystal layer is such that it is cancelled out when a plane lightwave dropping obliquely onto the cell in accordance with an observation plane parallel to the homeotropy direction has traversed its entire thickness, the angle formed between the observation plane and the major axis of the polarization ellipse of said wave.

5. Cell according to claim 4, characterized in that the polarization means comprises a linear polarizer (28) and, between the latter and the said assembly, a delay plate (29), in that the maximum absorption axis ($P_0$) of the linear polarizer is perpendicular to the homeotropy direction of the liquid crystal layer (25) and perpendicular to the observation plane, in that the delay plate is on the one hand positioned in such a way that its neutral line ($L_0$, $R_0$) are perpendicular

to the homeotropy direction and one of the bisectors of the angle formed by said neutral lines is projected, parallel to the homeotropy direction, onto the maximum absorption axis of the linear polarizer.

6. Cell according to any one of the claims 2,3 and 5, characterized in that each delay plate is made from a biaxial material such that its fastest neutral axis is aligned with the homeotropy direction.

7. Cell according to any one of the claims 2,3 and 5, characterized in that each delay plate is constituted by an additional liquid crystal cell, whereof the orientation of the molecules with respect to the walls of said additional cell is planar homogeneous.

**Patentansprüche**

1. Flüssigkristallzelle vom Durchsichttyp mit elektrisch gesteuerter Doppelbrechung, umfassend:
   - eine erste und eine zweite Platte (19, 20), die parallel zueinander und einander gegenüberliegend sind;
   - transparente Elektroden (19a, 20a), die auf die Innenseiten der genannten Platten (19, 20) aufgebracht sind;
   - eine nematische Flüssigkristallschicht (18) mit negativer, dielektrischer Anisotropie, die zwischen den genannten Platten (19, 20) eingeschlossen ist;
   - eine erste und eine zweite Polarisationseinrichtung (21, 23; 22, 24), die quasi-zirkularen, zueinander komplementären Polarisatoren äquivalent sind und sich auf den Außenseiten der genannten Platten (19, 20) befinden,

   **dadurch gekennzeichnet, daß**
   die Dicke der Flüssigkristallschicht gleich der doppelten bestimmten Dicke ($e_0$) ist, die, wenn eine ebene Lichtwelle, die schräg auf die Zelle entlang einer Beobachtungsebene parallel zu der Richtung der Homeotropie der Zelle fällt, diese ganze bestimmte Dicke durchlaufen hat, den Winkel aufheben kann, der zwischen der Beobachtungsebene und der großen Achse der Polarisationsellipse dieser Welle gebildet ist.

2. Zelle gemäß Anspruch 1, **dadurch gekennzeichnet,** daß die erste (21; 23) und die zweite (22; 24) Polarisationseinrichtung jeweils aus einem ersten Paar, das einen ersten, geradlinigen Polarisator (21) und zwischen diesem und der genannten Einheit ein erstes Verzögerungsplättchen (23) umfaßt, und einem zweiten Paar besteht, das einen zweiten geradlinigen Polarisator (22) und zwischen diesem und der Einheit ein zweites Verzögerungsplättchen (24) umfaßt, daß die jeweiligen maximalen Absorptionsachsen ($P_1$; $P_2$) der geradlinigen Polarisatoren zu einer gleichen Ebene (M) parallel sind, die senkrecht zu der Beobachtungsebene (P) und parallel zu der Richtung der Homeotropie der Schicht (18) ist, und senkrecht zu dieser Richtung der Homeotropie sind, daß jedes Verzögerungsplättchen (23; 24) derart angeordnet ist, daß seine neutralen Linien ($L_1$, $R_1$; $L_2$, $R_2$) senkrecht zu der Richtung der Homeotropie sind und daß eine der Winkelhalbierenden des Winkels, der von diesen neutralen Linien gebildet ist, sich parallel zu der Richtung der Homeotropie im wesentlichen auf die Achse der maximalen Absorption ($P_1$, $P_2$) des entsprechenden, geradlinigen Polarisators projiziert, daß die Verzögerungsplättchen ferner derart angeordnet sind, daß sich ihre jeweiligen langsamen Achsen auf beiden Seiten der genannten gleichen Ebene (M) befinden.

3. Zelle nach Anspruch 2, **dadurch gekennzeichnet,** daß die zwei Verzögerungsplättchen zu einem einzigen vereint sind, sich die Winkelhalbierende des Winkels, der durch die neutralen Linien dieses einzigen Plättchens gebildet ist, parallel auf die Richtung der Hometropie im wesentlichen auf die Achse der maximalen Absorption von einem der geradlinigen Polarisatoren projiziert.

4. Flüssigkristallzelle vom reflektierenden Typ mit elektrisch gesteuerter Doppelbrechung, umfassend:
   - eine erste und eine zweite Platte (26, 27), die zueinander parallel und einander gegenüberliegend sind;
   - eine erste, transparente Elektrode (26a), die auf die Innenseite der genannten ersten Platte (26) aufgebracht ist;
   - eine zweite, reflektierende Elektrode (27a), die auf die Innenseite der genannten zweiten Platte (27) aufgebracht ist;
   - eine nematische Flüssigkristallschicht (25) mit negativer, dielektrischer Anisotropie, die zwischen den genannten Platten (26, 27) eingeschlossen ist;
   - eine Zirkularpolarisationseinrichtung (28, 29), die sich auf der Außenseite der genannten ersten Platte (26) befindet,

   **dadurch gekennzeichnet,**
   daß die Dicke ($e_0$) der Flüssigkristallschicht derart ist, daß sie, wenn eine ebene Lichtwelle, die schräg auf die Zelle entlang einer zu der Richtung der Homeotropie parallelen Beobachtungsebene auffällt, diese ganze Dicke durchlaufen hat, den zwischen der Beobachtungsebene und der großen Achse der Polarisationsellipse dieser Welle gebildeten Winkel aufhebt.

5. Zelle gemäß Anspruch 4, **dadurch gekennzeichnet,** daß die Polarisationseinrichtung einen geradlinigen Polarisator (28) und zwischen diesem und der Einheit ein Verzögerungsplättchen (29) umfaßt, daß die Achse der maximalen Absorption ($P_0$) des geradlinigen Polarisators senkrecht zu der Richtung der Hometropie der Flüssigkristallschicht (25) und senkrecht zu der Beobachtungsebene ist, und daß das Verzögerungsplättchen einerseits so angeordnet ist, daß seine neutralen Linien ($L_0$, $R_0$) senkrecht zu der Richtung der Homeotropie sind und daß eine der Winkelhalbierenden des Winkels, der durch diese neutralen Linien gebildet wird, sich parallel zu der Richtung der Homeotropie auf die Achse der maximalen Absorption des geradlinigen Polarisators projiziert.

6. Zelle nach irgendeinem der Ansprüche 2, 3 und 5, **dadurch gekennzeichnet,** daß jedes Verzögerungsplättchen aus einem zweiachsigen Material so hergestellt ist, daß seine schnellste neutrale Achse zu der Richtung der Homeotropie ausgerichtet ist.

7. Zelle gemäß irgendeinem der Ansprüche 2, 3 und 5, **dadurch gekennzeichnet,** daß jedes Verzögerungsplättchen von einer zusätzlichen Flüssigkristallzelle gebildet ist, deren Ausrichtung der Moleküle in bezug auf die Wände der genannten zusätzlichen Zelle homogen plan ist.

FIG. 1A

FIG. 1B

FIG. 2A

FIG. 2B

FIG. 3

FIG. 4

FIG. 5

FIG. 6A

FIG. 6 B

13

FIG. 7A

FIG. 7B

FIG. 7C

FIG. 7D

FIG. 8